# EUROPEAN PATENT APPLICATION

(11) **EP 2 805 604 A1**
(43) Date of publication of application: **26.11.2014**
(21) Application number: 14382179.1
(22) Date of filing: 23.05.2014
(51) Int. Cl.: A01G 9/10

(54) **Thermoformed seed tray**

(30) Priority: 23.05.2013 ES 201330749
(71) Applicant: Flores Medel, Eduardo, 46005 Valencia (ES)
(72) Inventor: Flores Medel, Eduardo, 46005 Valencia (ES)
(74) Representative: Isern-Jara, Nuria

(57) **Abstract**

The present invention relates to a seed tray (1), having a perimeter wall (3) and which is manufactured using a thermoforming process. The tray has a plurality of alveolar cavities (4) or cells whose side faces are joined to the side faces of the adjacent alveolar cavities and, where appropriate, to the adjacent perimeter wall, and comprising recesses (12) made in the lower edge of the perimeter wall, thereby facilitating aeration and handling.

## Description

### Object of the invention

The present invention relates to a seed tray or seedbed serving as a tray, having a perimeter wall and which is manufactured using a thermoforming process. The tray has a plurality of alveolar cavities or cells whose side faces are joined to the side faces of the adjacent alveolar cavities and, where appropriate, to the adjacent perimeter wall, and by means of recesses made in the lower edge of the perimeter wall, thereby facilitating aeration and handling.

### Background of the Invention

Seed trays that consist of a sheet in which a series of cells or alveolar cavities are arranged whose convex portion is arranged at the bottom of the said sheet and which are used in automatic filling machines are well known in the state of the art. These seed trays are usually made from expanded polystyrene, also known as Styrofoam, for ease of handling due to its reduced weight.

Expanded polystyrene is a porous material having a very low mechanical resistance, which causes the seed trays made from this material to break easily, or in order to prevent it, the thickness of the sheet used has to be increased, which increases the weight, making handling more difficult, and increases the cost. Furthermore, the porosity of the expanded polystyrene allows the roots of the growing plant to penetrate the seed tray and on removal from the alveolar cavity, part of the roots is broken and the root ball gets damaged which causes distress in the plant that can cause it to die.

To solve the problem of porosity of the expanded polystyrene, plastic bags are used, such as those described in the utility model U200501240, which cover the concave portion of the alveolar cavities and prevent contact and penetration of the roots in the expanded polystyrene faces.

On the other hand, the cells or alveolar cavities of the seed trays that are currently available have a truncated pyramid shape or frustoconical shape with their smooth inner faces, resulting in the root growing by rotating and not randomly, so the vectoral growth of the plant is hindered once transplanted.

Another problem related to use of current seed trays manufactured from expanded polystyrene is that its underside is flat, so that when grouped or stacked one on top of the other, spacer elements between the various trays have to be used, to facilitate the entry of oxygen and homogenization of the temperature in the heating and cooling cycles to which they are subjected for optimum seed germination; the use of spacers is required even if the enclosures have forced air circulation. Moreover, when the lower face is flat, this implies that the space required for storage and transportation is considerably greater.

There are also thermoformed seed trays manufactured with sheets made from non-porous plastic material, namely, waterproof, of considerable thickness, so as to provide an acceptable mechanical strength, which increases their cost and weight.

The improved thermoformed seed tray offers a solution to the problems and drawbacks described above using a plastic sheet of reduced thickness and a thermoforming process, providing adequate mechanical strength, is easy to handle, ensures germination and optimum growth of seeds, takes up little space as one can fit on top of the other and facilitates aeration and all this at a very low cost.

### Description of the Invention

The improved thermoformed seed tray, object of the present invention, may be made from waterproof plastic material and may be manufactured by a thermoforming process. Said seed tray comprises a flat top sheet, preferably substantially rectangular in shape, and side walls are arranged on its entire perimeter, the side walls preferably being joined together by their side edges.

Two or more alveolar cavities are arranged on the flat top sheet, optionally having a depth less than the height of said side walls, such alveolar cavities which may be arranged in rows and columns.

The side faces of each of said alveolar cavities join the side faces of the adjacent alveolar cavities and, where appropriate, can be joined to the adjacent side wall. Joining the alveolar cavities with each other and with the side walls increases the mechanical strength of the improved thermoformed seed tray, and reduces the thickness and weight of the invention and it is therefore easier to handle and reduces its cost.

In each of the alveolar cavities, one or more drainage holes in the bottom and one or more first thickenings located on the concave surface are optionally arranged.

The cross section of alveolar cavities at its mouth can be substantially circular and the cross section at the bottom of said alveolar cavities can be cross-shaped with its vertices and end sides of the x-shapes rounded and circumscribed in a circumference of smaller diameter than the circle of the cross section of the mouth, the transition between the cross-sections of the mouth and the bottom being progressive; all edges of the alveolar cavities are rounded.

As another design option, the cross section of the alveolar cavities at its mouth and the bottom is substantially rectangular and all the edges of said alveolar cavities are rounded, this embodiment being able to be used as a support tray for the existing thermoformed trays on the market.

At least two or more side walls opposite each other at the lower edges and one or more recesses in the form of aeration channels, which can additionally be used as handgrips when handling, may be suitably arranged.

In at least one of the first side walls, one or more first identical undercuts may be arranged, convex towards the inside of the seed tray and preferably placed symmetrically in relation to an axis of symmetry of the top sheet. In at least one second side wall parallel to one of the first side walls, one or more second identical undercuts may be provided, being convex towards the inside of the improved thermoformed seed tray and positioned such that the position of the second undercuts located at one of the second side walls is alternated with the positions of the second undercuts located on the other second side wall, such that the trays can be stacked when the undercuts are in a coincident position and in another arrangement, for example by turning the seed tray 180°, where the undercuts are not coincident, the stacking of the seed trays is prevented therefore they are positioned superimposed on one another so they can be easily handled, automatically or manually, as they are not nested within one another.

As a design option, a second thickening is located on the underside of at least one undercut.

As a second design option, connecting the side faces of an alveolar cavity with the side faces of the adjacent alveolar cavities and, where appropriate, with the adjacent side walls can be done by thermoforming, heat-sealing or any other suitable connection.

### Description of the figures

Figure 1: top perspective of the seed tray.
Figure 2: bottom perspective of the seed tray.
Figure 3a and 3b: top and bottom perspectives of an alveolar cavity.

### List of references

1. Seed tray
2. Top sheet
3. Side walls
4. Alveolar cavity
5. Opening
6. First thickening
7. Joining of the alveolar cavities between each other
8. Joining of the alveolar cavities with the side walls
9. First undercut
10. Second undercut
11. Second thickening
12. Recess or aeration channel

### Preferred embodiment of the invention

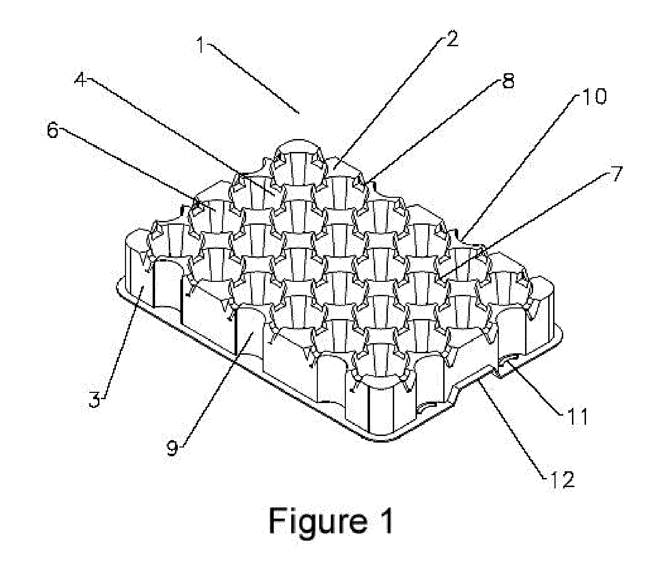

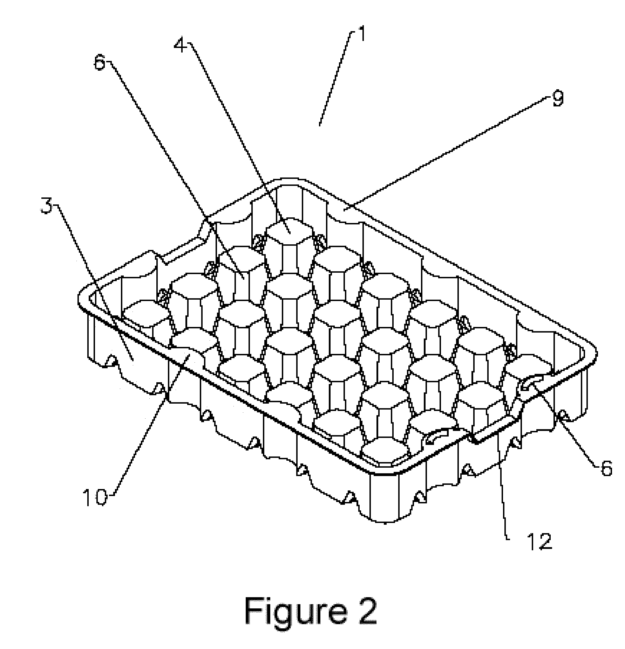

A preferred embodiment of the invention according to the description herein is shown in Figures 1 and 2.

In this preferred embodiment, the improved thermoformed seed tray is manufactured from plastic material by means of a thermoforming process and connecting the side faces together with the side walls is performed during the same thermoforming process.

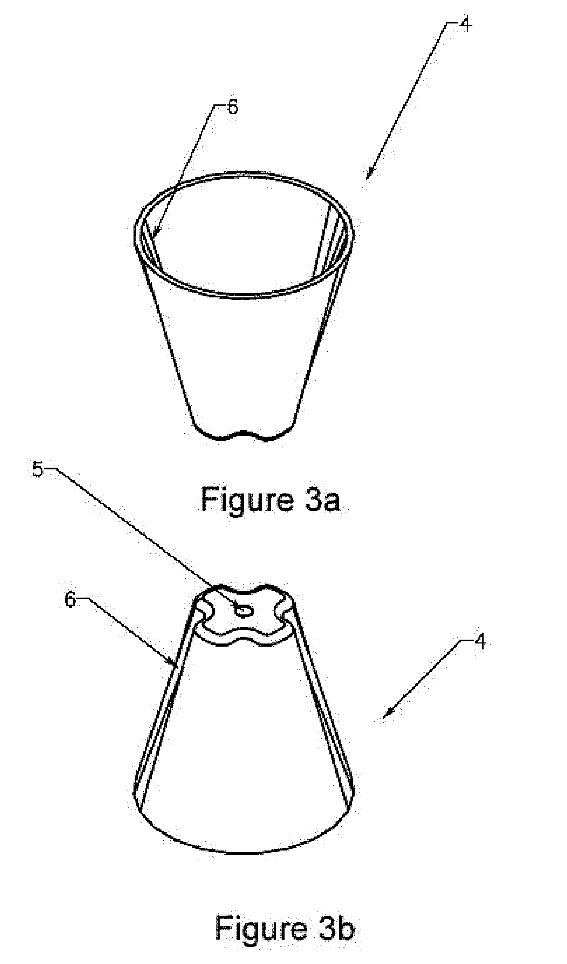

Figures 3a and 3b show an alveolar cavity of a second preferred embodiment of the invention, in which the cross section of the alveolar cavities at its mouth is substantially circular in shape and the cross section at the bottom of said alveolar cavities are cross-shaped with its vertices and end sides of the x-shapes rounded and circumscribed in a circumference of smaller diameter than the circle of the cross section of the mouth, the transition between the cross-sections of the mouth and the bottom is progressive; all edges of the alveolar cavities are rounded. The first thickenings located on the concave side of each of the alveolar cavities produce random and non-rotating growth of the root, this random root growth promotes vectorial plant growth once transplanted.

One or more openings in the bottom of each alveolar cavity for draining is also shown, namely, to prevent the excess water when watering the seeds from accumulating at the bottom and damaging the seed or preventing or delaying its growth.

Figures 1 and 2 show the aeration channel arranged in at least one of the side walls which facilitates the aeration of the stacks of trays and consequently that the seeds in the growth process have the amount of oxygen required and the temperature is homogeneous in the hot/cold cycles to which the seedbeds are subjected. These aeration channels means there is no need for partition elements between trays as is necessary in the case of expanded polystyrene seed trays. In addition, these aeration channels make it easier to handle the seed tray as they are used as handlegrips for the trays.

In Figures 1 and 2, for this embodiment, three first equal undercuts, convex towards the inside of the seed tray and placed symmetrically in relation to an axis of symmetry of the top sheet can be seen on one of the side walls, where there is no aeration channel. Two identical undercuts are arranged on the parallel side wall, being convex towards the inside of the tray located such that they are in an alternate position with the first three undercuts, such that they are not facing each other. This arrangement of the undercuts described enable the trays to be stacked when the undercuts from several trays, one above the other, are in a coincident position and in another arrangement, for example by turning the seed tray 180°, where the undercuts from two trays, one above another, are not coincident, the stacking of the seed trays is prevented therefore they are positioned superimposed on one another so they can be easily handled, automatically or manually, as they are not nested within one another.

In the stacked position, the top tray fits into the lower tray reducing the height of the assembly and the volume needed for storage and transport.

Assuming a standard number of 150 alveolar cavities on each tray and each tray measuring 690cm long, 470cm wide and 7cm high, for both the present invention and for a seed tray of expanded polystyrene and when they are stacked on a European pallet with a height of 1m, 130 improved thermoformed seed trays can be stacked, whereas only 46 of the trays manufactured in expanded polystyrene can be stacked.

Another preferred embodiment of the invention is made with a thicker sheet and the cross section of the alveolar cavities is substantially rectangular and can be used as the support tray for the seed trays which do not incorporate side walls.

The details, shapes and dimensions and other accessory elements as well as the materials used in the improved thermoformed seed tray of the invention may be conveniently replaced by others which are technically equivalent and do not depart from the essential nature of the invention or from the scope defined by the claims provided hereinafter.

## Claims

1. Improved thermoformed seed tray **characterised in that** it comprises a flat top sheet and side walls arranged around its perimeter; two or more alveolar cavities are arranged in the top sheet wherein at least one of the side faces of said alveolar cavities joins to at least one of the side faces of the adjacent alveolar cavities.

2. Improved thermoformed seed tray according to claim 1, **characterised in that** the side faces of the alveolar cavities adjacent to the side walls are joined at least one point to said side walls.

3. Improved thermoformed seed tray according to claim 1 or 2, **characterised in that** the alveolar cavities have a depth less than the height of said side walls, such alveolar cavities being arranged in rows and columns.

4. Improved thermoformed seed tray according to claim 3, **characterised in that** one or more recesses are suitably arranged, serving as aeration channels, in each of the lower edges of at least one pair of mutually opposite side walls.

5. Improved thermoformed seed tray according claim 3 or 4 **characterised in that** on at least one of the first side walls, one or more first identical undercuts are arranged, convex towards the inside of the seed tray; in at least one second side wall parallel to one of the first side walls, one or more second identical undercuts are arranged, convex towards the inside of the seed tray and positioned such that the position of the second undercuts located in one of the second side walls is alternated with the position of the second undercuts located on the other second side wall.

6. Improved thermoformed seed tray according to claim 5, **characterised in that** the first undercuts are symmetrically placed in relation to an axis of symmetry of the top sheet.

7. Improved thermoformed seed tray according to claim 5 or 6, **characterised in that** a second thickening is located in the underside of each of the first undercuts located in one of the first side walls.

8. Improved thermoformed seed tray according to any of the preceding claims, **characterised in that** there are one or more first thickenings located on the concave side of each of the alveolar cavities.

9. Improved thermoformed seed tray according to claim 8, **characterised in that** the cross section of the alveolar cavities at its mouth is substantially circular in shape and the cross section at the bottom of said alveolar cavities are cross-shaped with its vertices and end sides of the x-shapes rounded and circumscribed in a circumference of smaller diameter than the circle of the cross section of the mouth, the transition between the cross-sections of the mouth and the bottom is progressive; all the edges of alveolar cavities are rounded.

10. Improved thermoformed seed tray according to any one of claims 1-7, **characterised in that** the cross section of the alveolar cavities both at their mouth and the bottom is substantially rectangular and all the edges of said alveolar cavities are rounded.

11. Improved thermoformed seed tray according to any of the preceding claims, **characterised in that** there are one or more drainage openings arranged at the bottom of each of the alveolar cavities.

12. Improved thermoformed seed tray according to any one of the previous claims, **characterised in that** it is made of plastic material and substantially parallelepipedal in shape; the flat top sheet is substantially rectangular in shape and the side walls are interconnected at their side edges and arranged on its entire perimeter.

13. Improved thermoformed seed tray according to claim 12, **characterised in that** it is manufactured by means of thermoforming.

14. Improved thermoformed seed tray according to claim 12, **characterised in that** connecting the side faces of an alveolar cavity with the side faces of the adjacent alveolar cavities and, where appropriate, with the adjacent side walls can be done by thermoforming, heat-sealing or any other suitable connection.
